**Europäisches Patentamt**

**European Patent Office**

**Office européen des brevets**

(19)

(11) Publication number: **0 136 690**

**A2**

(12) # EUROPEAN PATENT APPLICATION

(21) Application number: **84111723.7**

(22) Date of filing: **01.10.84**

(51) Int. Cl.⁴: **B 60 T 13/24**

(30) Priority: **05.10.83 JP 186499/83**

(43) Date of publication of application:
**10.04.85 Bulletin 85/15**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Kubota, Hitoshi**
**107-2, Mitake**
**Minamiashigara-shi Kanagawa-ken(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Vehicle brake system.

(57) A sensor measures the magnitude of a force applied to a brake operating member, such as a brake pedal. A desired magnitude of a braking force applied to a vehicle is determined in accordance with a changeable relationship between the desired braking force and the force applied to the brake operating member. The actual magnitude of the braking force is adjusted to the desired braking force magnitude. In place of the desired braking force, a desired rate of deceleration of the vehicle may be determined in accordance with a changeable relationship between the desired deceleration rate and the magnitude of the force applied to the brake operating member. In this case, the actual rate of deceleration of the vehicle is adjusted to the desired deceleration rate.

FIG.1

EP 0 136 690 A2

# VEHICLE BRAKE SYSTEM

## BACKGROUND OF THE INVENTION

This invention relates to a brake system for a vehicle.

In most vehicle brakes, when the operator depresses the brake pedal, the vehicle is subjected to a braking force essentially proportional to the depression force applied to the brake pedal. The relationship between the braking force and the depression force is basically fixed.

In various uses of vehicles, an adjustable or variable relationship between the braking force and the depression force is convenient.

## SUMMARY OF THE INVENTION

It is an object of this invention to provide a brake system for a vehicle which produces a braking force having an adjustable relationship with the depression force applied to the brake pedal.

In accordance with this invention, a sensor measures the magnitude of a force applied to a brake operating member, such as a brake pedal. A desired magnitude of a braking force applied to a vehicle is determined in accordance with a changeable relationship between the desired braking force and the force applied to the brake operating member. The actual magnitude of the braking force is adjusted to the desired braking force magnitude. In place of the desired braking force, a desired rate of deceleration of the vehicle may be determined in accordance with a changeable relationship between the desired deceleration rate and the magnitude of the force applied to the brake operating member. In this case, the actual rate of deceleration of the vehicle is adjusted to the desired deceleration rate.

## BRIEF DESCRIPTION OF THE DRAWINGS

Fig. 1 is a diagram of a vehicle brake system according to a first embodiment of this invention.

Fig. 2 is a flowchart of a program for controlling the operation of the control unit of Fig. 1.

Fig. 3 is a graph of the first relationship between the depression force applied to the brake pedal and the desired braking force applied to the vehicle.

Fig. 4 is a graph of the second relationship between the depression force applied to the brake pedal and the desired braking force applied to the vehicle.

Fig. 5 is a diagram of a valve arrangement used in place of the three-way valve of Fig. 1.

Fig. 6 is a diagram of a vehicle brake system according to a second embodiment of this invention.

Fig. 7 is a flowchart of a program for controlling the operation of the control unit of Fig. 6.

Fig. 8 is a graph of the first and second relationships between the depression force applied to the brake pedal and the desired rate of deceleration of the vehicle.

Like and corresponding elements are denoted by the same reference characters throughout the drawings.

DESCRIPTION OF THE PREFERRED EMBODIMENTS

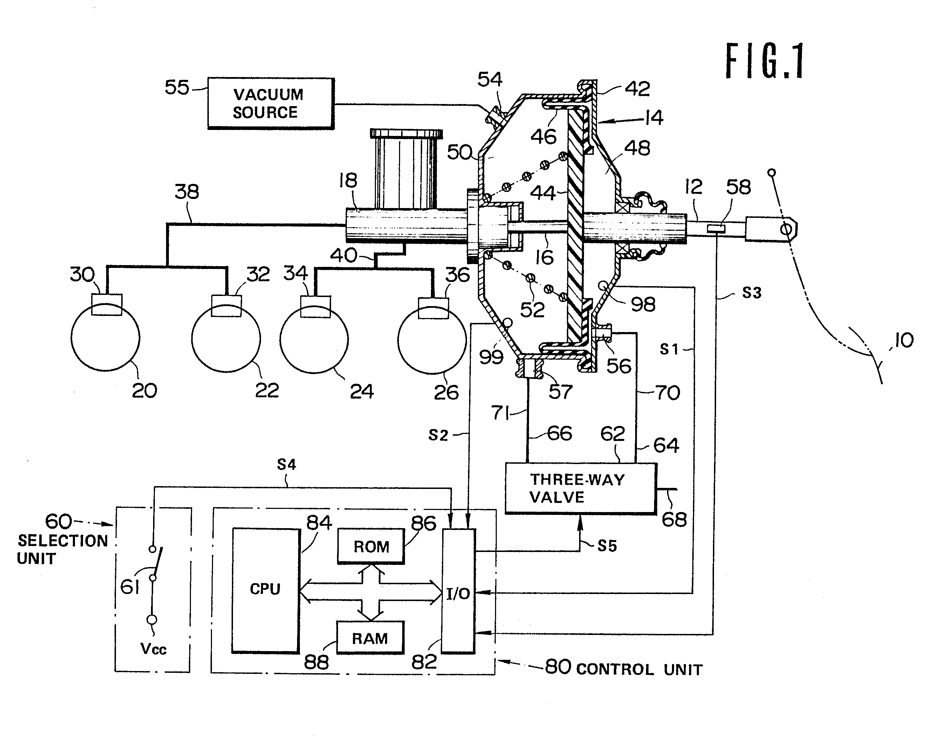

With reference to Fig. 1 showing a first embodiment of this invention, a brake pedal 10 is linked to an input rod 12 of a brake power booster 14 so that depression of the brake pedal 10 forces the input rod 12 to move axially. The power booster 14 includes an output or push rod 16 engaging a master cylinder 18. As the input rod 12 is driven by depression of the brake pedal 10, the output rod 16 pushes or actuates the master cylinder 18 with a force normally enhanced by the power booster 14.

Brake units 20, 22, 24, and 26 for front and rear vehicle wheels include front and rear wheel cylinders 30, 32, 34, and 36, respectively. The front wheel cylinders 30 and 32 are hydraulically connected to the master cylinder 18 via a hydraulic line 38. The rear wheel cylinders 34 and 36 are hydraulically connected to the master cylinder 18 via a hydraulic line 40. As the master cylinder 18 is driven, the wheel cylinders 30, 32, 34, and 36 are actuated through the transmission of hydraulic pressure between the master cylinder and the wheel cylinders.

The power booster 14 includes a shell or casing 42 within which a power piston 44 is movably disposed. The input rod 12 movably extends into the shell 42 and connects to the power piston 44. A diaphragm 46 sealingly connected between the shell 42 and the power piston 44 divides the interior of the shell 42 into an adjustable pressure chamber 48 and a reference pressure chamber 50 in conjunction with the power piston 44. The push rod 16 secured to the power piston 44 movably extends out of the shell 42 and engages the master cylinder 18. A return spring 52 seated between the shell 42 and the power piston 44 urges the power piston 44 toward its rest position as defined when there is no pressure differential across the diaphragm 46. The shell 42 is provided with a reference pressure inlet 54 opening into the reference pressure chamber 50 and connected to a vacuum source 55, such as the air intake manifold of a vehicular engine or a vacuum pump. In this way, the reference pressure chamber 50 is supplied with an essentially constant vacuum pressure from the source 55. A check valve is preferably disposed in the connection between the reference pressure chamber 50 and the vacuum source 55 to hold the vacuum in the chamber 50 when the vacuum developed by the source 55 weakens. The shell 42 is provided with an adjustable pressure inlet 56 via which the adjustable pressure chamber 48 is supplied with a variable pressure as described hereafter. The power piston 44 is thus subjected to the differential between the vacuum and the variable pressure, thereby exerting a variable force on the master cylinder 18 in addition to the normal force resulting directly from depression of the brake pedal 10. Specifically, the braking force proportional to the force applied to the master cylinder 18 increases as the pressure in the adjustable pressure chamber 48 rises.

A pressure sensor 98 disposed in the adjustable pressure chamber 48 senses the pressure in the chamber 48 and outputs a signal S1 indicative thereof. Another pressure sensor 99 disposed in the reference pressure chamber 50 senses the pressure in the chamber 50 and outputs a signal S2 indicative thereof. It should be noted that the differential between the pressures in the chambers 48 and 50 affects the braking force applied to the vehicle.

A strain gage 58 mounted on the input rod 12 senses the axial strain of the input rod 12 which reflects the depression force on the brake pedal 10. In this way, the strain gage 58 measures the depression force applied to the brake pedal 10 and generates a signal S3 representative thereof.

A displacement sensor may be used in place of the strain gage. In this case, the displacement sensor is associated with the input rod 12 to sense the axial displacement of the input rod 12 which is proportional to the degree of depression of the brake pedal 10 determined by the depression force on the brake pedal 10. The displacement sensor may include a potentiometer having a linearly movable control arm which is fixed to the input rod 12 to move with axial movement of the input rod 12. A constant voltage is applied across the resistor of the potentiometer. Accordingly, the voltage between one end of the resistor and the sliding point movable with the control arm varies as a function of the depression force applied to the brake pedal 10. This voltage is used as the signal S3. In this way, the signal S3 indicates the depression force applied to the brake pedal 10 and also the degree of depression of the brake pedal 10, that is, the position of the brake pedal 10.

The displacement sensor may be of any other type which directly senses the degree of depression of the brake pedal 10 as an indication of the depression force applied to the brake pedal 10.

A selection unit 60 includes a manual switch 61 connected in series with a constant DC voltage source Vcc. The selection unit 60 generates a signal S4 representing the position of the switch 61. Specifically, when the selection switch 61 is closed, the signal S4 is at its higher level. When the selection switch 61 is opened, the signal S4 has essentially an infinite impedance. As will be made clear hereafter, the manual switch 61 can be actuated to select one of first and second desired relationships between the braking force and the depression force. In more detail, when the selection switch 61 is in its closed position, the first desired relationship between the braking force and the depression force is selected. When the selection switch 61 is in its open position, the second desired relationship is selected. In other words, the signal S4 represents the desired relationship between the braking force and the depression force to be selected.

An electrically-driven or electromagnetic three-way valve 62 includes first, second, and third ports 64, 66, and 68. When electrically de-energized, the valve 62 connects the first port 64 only to the second port 66. When electrically energized at a lower level, the valve 62 disconnects the first port 64 from both of the other ports 66 and 68. When electrically energized at a higher level, the valve 62 connects the first port 64 only to the third port 68.

The first port 64 is connected to the adjustable pressure inlet 56 via an adjustable pressure line 70. The second port 66 is connected to the reference pressure chamber 50 via a vacuum line 71 and an outlet 57 formed through the shell 42. The third port 68 leads to the open air. When the valve 62 is de-energized to connect the first port 64 only to the second port 66, the adjustable pressure chamber 48 of the power booster 14 is exposed to vacuum. In this case, the pressure in the adjustable pressure chamber 48 drops to a level equal to the vacuum pressure in the reference pressure chamber 50, so that the power piston 44 moves toward its rest position due to the force of the spring 52 and thus the braking force is reduced. In this situation, the power booster 14 and the master cylinder 18 assume their rest positions and no braking force is applied provided that the brake pedal 10 is in its released position. When the valve 62 is energized at the higher level to connect the first port 64 only to the third port 68, atmospheric pressure is supplied to the adjustable pressure chamber 48. In this case, the pressure in the adjustable pressure chamber 48 rises above the vacuum pressure in the reference pressure chamber 50, so that the power piston 44 moves away from its rest position and thus the braking force is enhanced. When the valve 62 is energized at the lower level to disconnect the first port 64 from either of the ports 66 and 68, the pressure in the adjustable pressure chamber 48 remains essentially as it is. This holds the braking force essentially unchanged.

A digital microcomputer unit 80 called a control unit hereafter includes an input/output (I/O) circuit 82, a central processing unit (CPU) 84, a read-only memory (ROM) 86, and a random-access memory (RAM) 88 all mutually connected. The I/O circuit 82 is connected to the sensors 58, 98, and 99, and the selection unit 60 to receive the pressure signals S1 and S2, the depression force signal S3, and the selection signal S4. On the basis of these signals S1, S2, S3, and S4, the control unit 80 generates a signal S5 designed for control of the three-way valve 62. The I/O circuit 82 is connected to the three-way valve 62 to apply the control signal S5 to the valve 62.

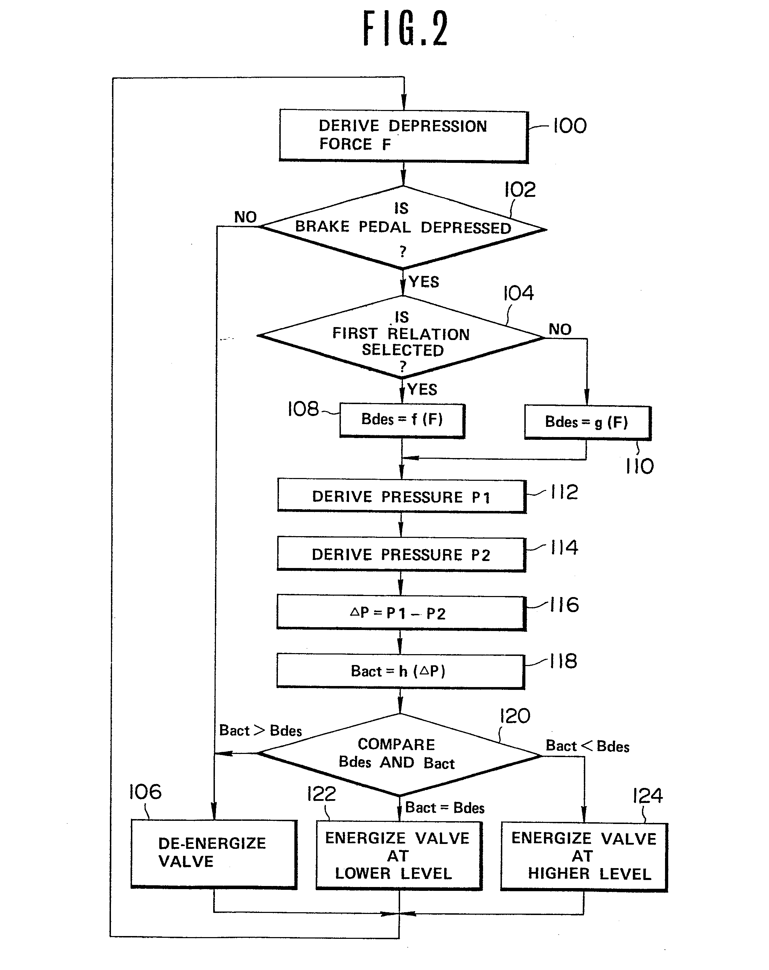

The control unit 80 operates in accordance with a program stored in the ROM 86. Fig. 2 is a flowchart of this program. In a first step 100 of this flowchart, the current value of the depression force applied to the brake pedal 10 is derived from the depression force signal S3. In this flowchart, this depression force value is represented by the variable F. After the step 100, the program advances to a step 102.

In the step 102, a determination is made about whether or not the brake pedal 10 is depressed, specifically whether or not the depression force value F exceeds zero. If the brake pedal 10 is depressed, that is, if the depression force value F exceeds zero, the program advances to a step 104. If the brake pedal 10 is not depressed, that is, if the depression force value F is zero, the program advances to a step 106.

In the step 106, the control signal S5 designed to de-energize the three-way valve 62 is outputted. This causes the adjustable pressure chamber 48 of the power booster 14 to be exposed to vacuum, so that the power piston 44 is in its rest position at which the master cylinder 18 is inactive and thus no braking force is applied. After the step 106, the program returns to the first step 100. Accordingly, as long as the brake pedal 10 remains released, the power piston 44 is held in its rest position and thus no braking force is applied.

In the step 104, a determination is made about whether or not the first desired relationship between the braking force and the depression force is selected on the basis of the selection signal S4, specifically whether or not the selection switch 61 is in its closed position.

If the first desired relationship is selected, that is, if the selection switch 61 is in its closed position, the program advances to a step 108. If the first desired relationship is not selected, that is, if the selection switch 61 is open and thus the second desired relationship is selected, the program advances to a step 110.

In the step 108, a desired value of the braking force is determined on the basis of the depression force value F. In this flowchart, the variable Bdes represents this desired braking force value. Specifically, the desired braking force value Bdes is calculated by means of a first equation "Bdes = f(F)", where f(F) is a first preset function of the depression force value.

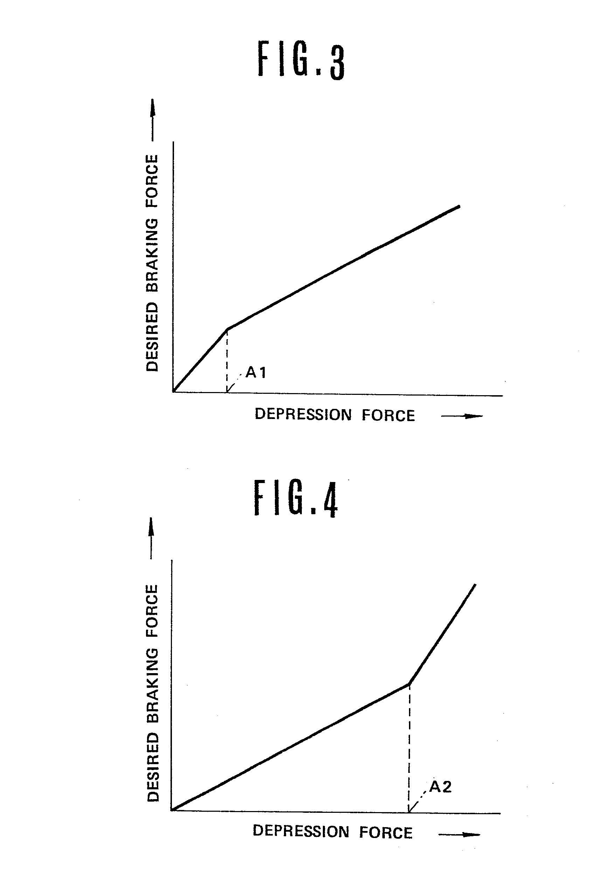

Fig. 3 shows the first relationship between the desired braking force value and the depression force value in accordance with the first equation. As the depression force increases from zero to a level Al, the desired braking force increases linearly at a first slope. As the depression force increases from the point Al, the desired braking force increases linearly at a second slope less than the first slope. In this way, the desired braking force value increases with the depression force value at a relatively high rate in the range of small depression force values.

The desired braking force value Bdes may be determined in another way as follows: the ROM 86 holds a table in which a set of desired braking force values are plotted as a first function of the depression force value. The determination is carried out by referring to this table.

In the step 110, a desired braking force value Bdes is determined on the basis of the depression force value F. Specifically, the desired braking force value Bdes is calculated by means of a second equation "Bdes = g(F)", where g(F) is a second preset function of the depression force value.

Fig. 4 shows the second relationship between the desired braking force value and the depression force value in accordance with the second equation. As the depression force increases from zero to a level A2, the desired braking force increases linearly at a third slope. As the depression force increases from the point A2, the desired braking force increases linearly at a fourth slope greater than the third slope. In this way, the desired braking force value increases with the depression force value at a relatively high rate in the range of great depression force values.

The desired braking force value Bdes may be determined in another way as follows: the ROM 86 holds a table in which a set of desired braking force values are plotted as a second function of the depression force value. The determination is carried out by referring to this table.

As a result of cooperation among the steps 104, 108, and 110, the first relationship between the desired braking force and the depression force or the second relationship is selected in compliance with a selection request transmitted via the selection signal S4. Specifically, the first relationship is selected when the selection switch 61 is closed and the second relationship is selected when the selection switch 61 is open.

After the steps 108 and 110, the program advances to a step 112 in which the current value of the pressure in the adjustable pressure chamber 48 is derived from the pressure signal Sl. In this flowchart, the variable Pl represents this pressure value.

In a step 114 subsequent to the step 112, the current value of the pressure in the reference pressure chamber 50 is derived from the pressure signal S2. In this flowchart, the variable P2 represents this pressure value.

After the step 114, the program advances to a step 116 in which the differential between the pressure values P1 and P2 is determined. In this flowchart the variable $\Delta P$ represents this pressure differential. Specifically, "$\Delta P = P1 - P2$" is executed. It should be noted that the pressure differential $\Delta P$ reflects the level of actual braking force.

In a step 118 following the step 116, an actual braking force value is determined on the basis of the pressure differential $\Delta P$. In this flowchart, the variable Bact represents this actual braking force value. Specifically, the actual braking force value Bact is calculated by means of a third equation "$Bact = h(\Delta P)$", where $h(\Delta P)$ is a third preset function of the pressure differential. After the step 118, the program advances to a step 120.

In the step 120, the desired braking force value Bdes and the actual braking force value Bact are compared. If the actual value Bact is larger than the desired value Bdes, the program advances to the step 106. If the actual value Bact and the desired value Bdes are equal, the program advances to a step 122. If the actual value Bact is smaller than the desired value Bdes, the program advances to a step 124.

As described previously, in the step 106, the control signal S5 designed to de-energize the three-way valve 62 is outputted. This causes the adjustable pressure chamber 48 of the power booster 14 to be exposed to vacuum.

In the step 122, the control signal S5 designed to energize the three-way valve 62 at the lower level is outputted. As described previously, this allows the pressure in the adjustable pressure chamber 48 of the power booster 14 to remain as it is.

In the step 124, the control signal S5 designed to energize the three-way valve 62 at the higher level is outputted. As described previously, this exposes the adjustable pressure chamber 48 of the power booster 14 to atmosphere.

After the steps 106, 122, and 124, the program returns to the first step 100. Accordingly, this program is reiterated.

As a result of cooperation between the steps 120 and 106, when the actual braking force is larger than the desired braking force, the adjustable pressure chamber 48 of the power booster 14 is exposed to vacuum. This reduces the pressure differential across the power piston 44 of the power booster 14, thereby decreasing the actual braking force.

As a result of cooperation between the steps 120 and 122, when the actual braking force is equal to the desired braking force, the pressure in the adjustable pressure chamber 48 of the power booster 14 remains as it is. This holds the pressure differential across the power piston 44 of the power booster 14 constant, thereby also maintaining the actual braking force as it is.

As a result of cooperation between the steps 120 and 124, when the actual braking force is smaller than the desired braking force, the adjustable pressure chamber 48 of the power booster 14 is exposed to atmosphere. This increases the pressure differential across the power piston 44 of the power booster 14, thereby enhancing the actual braking force.

In this way, the actual braking force is maintained at a level essentially equal to the desired braking force, and follows the desired braking force if it deviates from the desired braking force. It should be noted that the desired braking force varies as a function of the depression force applied to the brake pedal 10. Since the degree of depression of the brake pedal 10 depends on the depression force applied to the brake pedal 10, the desired braking force is also determined by the degree of depression of the brake pedal 10, that is, the position of the brake pedal 10.

In operation, while the brake pedal 10 remains released, the power booster 14 and the master cylinder 18 are at rest and thus no braking force is applied as described previously.

When the brake pedal 10 is depressed, a desired level of braking force dependent on the level of depression force applied to the brake pedal 10 is determined in accordance with one of the first and second relationships between the desired braking force and the depression force which has been selected via the selection unit 60. Simultaneously, the actual level of braking force is determined. At the very beginning of brake pedal depression, the actual braking force is less than the desired braking force due to normal response time lag so that the atmospheric pressure is supplied to the adjustable pressure chamber 48 of the power booster 14. This increases the pressure differential across the power piston 44 of the power booster 14, thereby enhancing the actual braking force. When the actual braking force increases to a level equal to the desired braking force, the adjustable pressure chamber 48 is then completely sealed and thus the pressure in this chamber 48 is maintained as it is. This holds the pressure differential across the power piston 44 unchanged, thereby also maintaining the actual braking force as it is. When the actual braking force increases above the desired braking force, the vacuum is supplied to the adjustable pressure chamber 48. This vacuum supply reduces the pressure differential across the power piston 44, thereby decreasing the actual braking force. In this way, the actual braking force is maintained at a level essentially equal to the desired braking force which depends on the depression force in accordance with selected one of the first and second relationships.

Specifically, the first relationship and the second relationship are selected when the selection switch 61 is closed and opened respectively.

When the brake pedal 10 is released, the adjustable pressure chamber 48 of the power booster 14 is exposed to vacuum so that the pressure differential across the power piston 44 of the power booster 14 decreases. This allows the power booster 14 and the master cylinder 18 to assume their rest positions, thereby reducing the actual braking force to zero.

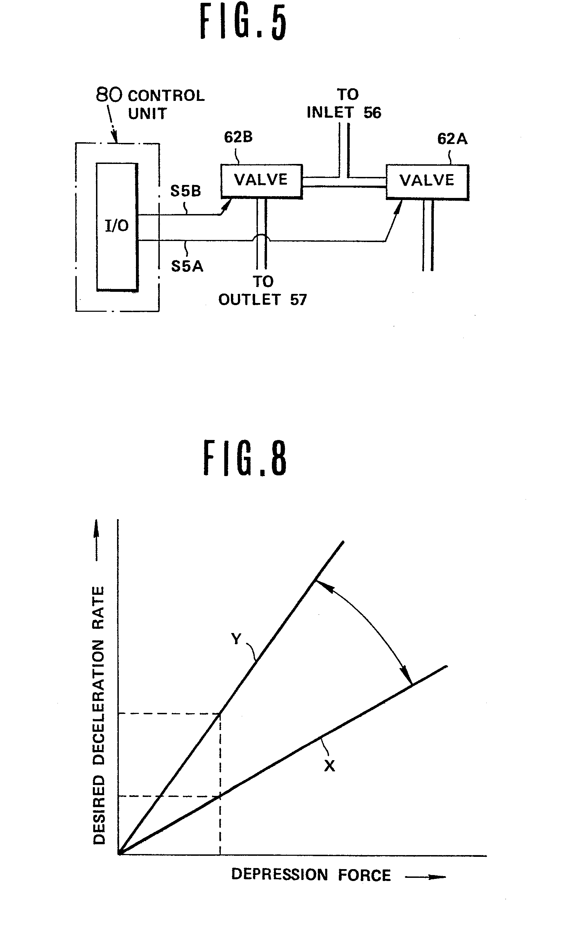

Fig. 5 shows a valve arrangement which can be used in place of the three-way valve 62 of Fig. 1. This arrangement includes electrically-driven or electromagnetic ON-OFF valves 62A and 62B. The adjustable pressure inlet 56 of the power booster 14 leads to the open air via the first valve 62A. The adjustable pressure inlet 56 is also connected to the outlet 57 of the power booster 14 via the second valve 62B. The first valve 62A is normally closed. The second valve 62B is normally open. When both of the valves 62A and 62B are electrically de-energized, the first valve 62A is closed and the second valve 62B is open. In this case, the adjustable pressure chamber 48 of the power booster 14 is exposed to vacuum. When the first valve 62A is electrically de-energized and the second valve 62B is electrically energized, both of the valves 62A and 62B are closed so that the adjustable pressure chamber 48 is completely sealed. When both of the valves 62A and 62B are electrically energized, the first valve 62A is open and the second valve 62B is closed so that the adjustable pressure chamber 48 is exposed to atmosphere.

The control unit 80 generates control signals S5A and S5B designed for control of the valves 62A and 62B respectively. The valves 62A and 62B are connected to the I/O circuit 82 of the control unit 80 to receive these signals S5A and S5B.

0136690

- 14 -

The program for controlling the control unit 80 in conjunction with the valve arrangement of Fig. 3 is modified as follows: in the step 106, the control signals S5A and S5B designed to de-energize the valves 62A and 62B are outputted. This exposes the adjustable pressure chamber 48 of the power booster 14 to vacuum. In the step 122, the control signal S5A designed to de-energize the first valve 62A and the control signal S5B designed to energize the second valve 62B are outputted. This completely seals the adjustable pressure chamber 48 of the power booster 14. In the step 124, the control signal S5A designed to energize the first valve 62A and the control signal S5B designed to energize the second valve 62B are outputted. This exposes the adjustable pressure chamber 48 of the power booster 14 to atmosphere.

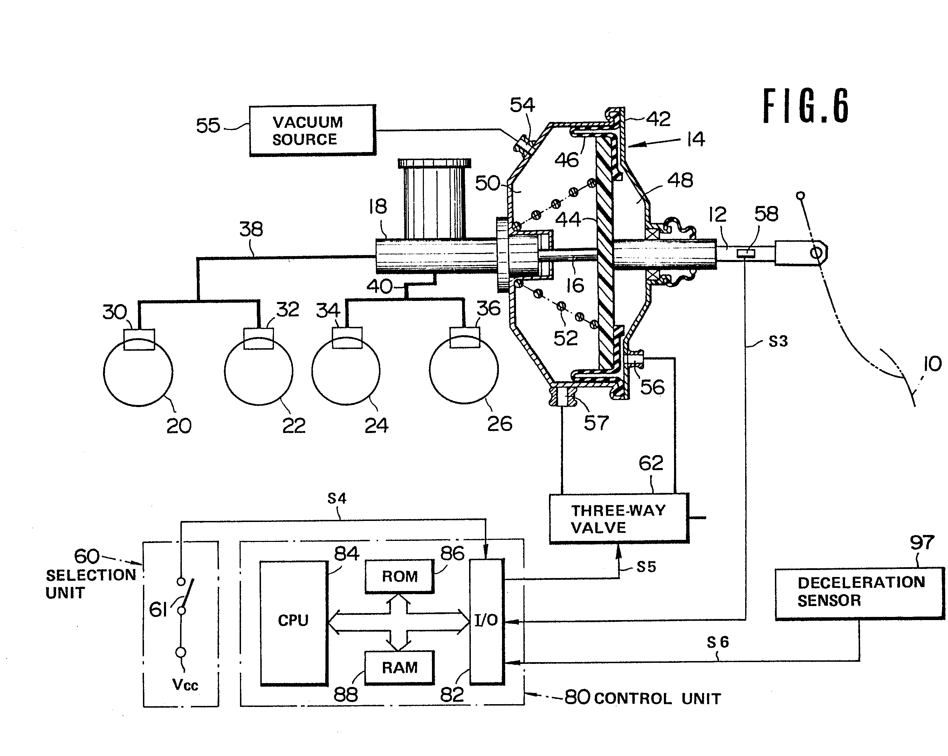

Fig. 6 shows a second embodiment of this invention which is designed in a manner similar to the embodiment of Fig. 1 except for the following design changes.

The pressure sensors 98 and 99 (see Fig. 1) are omitted from this embodiment.

As will be made clear hereafter, the manual switch 61 of the selection unit 60 is actuated to select one of first and second desired relationships between the depression force applied to the brake pedal 10 and the rate of deceleration of the vehicle. When the selection switch 61 is in its closed position, the first desired relationship is selected. When the selection switch 61 is in its open position, the second relationship is selected. In this way, the selection signal S4 outputted by the selection unit 60 represents the desired relationship between the depression force and the deceleration rate to be selected.

A deceleration sensor 97 measures the rate of deceleration of the vehicle and generates an electrical signal S6 representative thereof. The I/O circuit 82 of the control unit 80 is connected to the deceleration sensor 97 to receive the signal S6. The deceleration sensor 97 includes a speed sensor and a differentiator. The speed sensor generates a voltage proportional to the speed of the vehicle. The differentiator differentiates this voltage to derive the deceleration rate signal S6.

The deceleration sensor 97 may be of other types including an inertial member movable relative to the body of the vehicle. The inertial member responds to the vehicle deceleration rate. This response is sensed by a known arrangement to generate the deceleration rate signal S6.

The deceleration sensor 97 may also be of types which determine the vehicle deceleration rate by measuring the load on the front and rear vehicle wheels, specifically the load per vehicle wheel.

The deceleration sensor 97 may further be of types which determine the vehicle deceleration rate by detecting deceleration-dependent parameters, such as the hydraulic pressure generated by the master cylinder 18, the braking torque, the temperature of brake pads, and the coefficient of friction between vehicle tires and the surface of the road.

The deceleration sensor 97 may be of other known types.

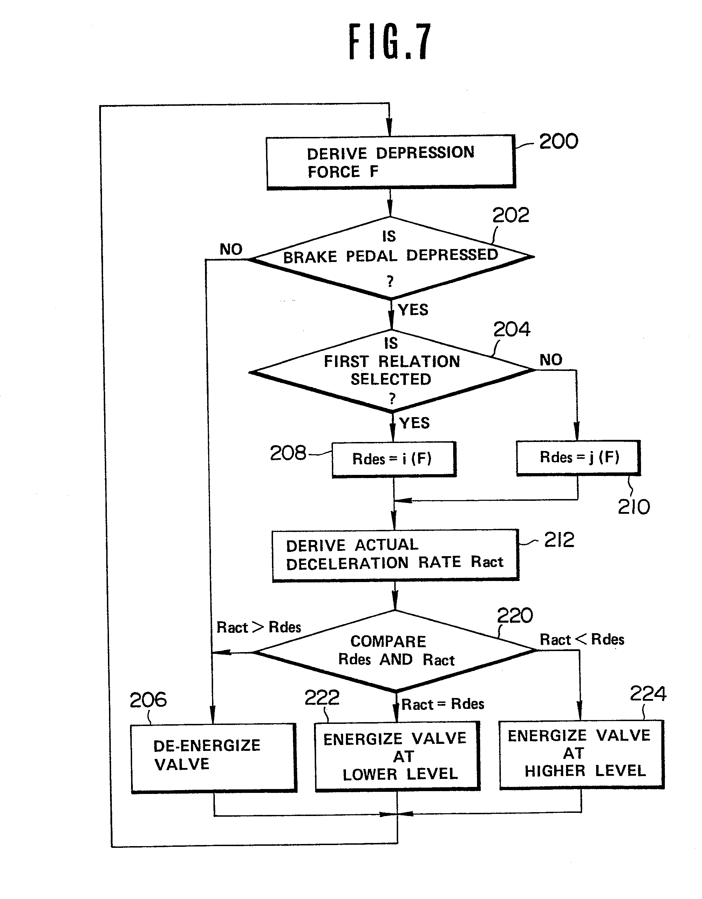

Fig. 7 is a flowchart of a program for controlling the operation of the control unit 80 of Fig. 6. In a first step 200 of this program, the current value of the depression force applied to the brake pedal 10 is derived from the depression force signal S3. In this flowchart, this depression force value is represented by the variable F. After the step 200, the program advances to a step 202.

In the step 202, a determination is made about whether or not the brake pedal 10 is depressed, specifically whether or not the depression force value F exceeds zero. If the brake pedal 10 is depressed, that is, if the depression force value F exceeds zero, the program advances to a step 204. If the brake pedal 10 is not depressed, that is, if the depression force value F is zero, the program advances to a step 206.

In the step 206, the control signal S5 designed to de-energize the three-way valve 62 is outputted. This exposes the adjustable pressure chamber 48 of the power booster 14 to vacuum, so that the power piston 44 is in its rest position at which the master cylinder 18 is inactive and thus no braking force is applied. After the step 206, the program returns to the first step 200. Accordingly, as long as the brake pedal 10 remains released, the power piston 44 is held in its rest position and thus no braking force is applied.

In the step 204, a determination is made about whether or not the first desired relationship between the depression force and the deceleration rate is selected on the basis of the selection signal S4, specifically whether or not the selection switch 61 is in its closed position. If the first desired relationship is selected, that is, if the selection switch 61 is in its closed position, the program advances to a step 208. If the first desired relationship is not selected, that is, if the selection switch 60 is open and thus the second desired relationship is selected, the program advances to a step 210.

In the step 208, a desired value of the rate of deceleration of the vehicle is determined on the basis of the depression force value F. In this flowchart, the variable Rdes represents this desired deceleration rate value. Specifically, the desired deceleration rate value Rdes is calculated by means of a first equation "Rdes = i(F)", where i(F) is a first preset function of the depression force value.

In the step 210, a desired deceleration rate value Rdes is determined on the basis of the depression force value F. Specifically, the desired deceleration rate value Rdes is calculated by means of a second equation "Rdes = j(F)", where j(F) is a second preset function of the depression force value.

In Fig. 8, the letter X denotes the first relationship between the depression force and the desired deceleration rate used in the step 208. In this first relationship X, the desired deceleration rate is proportional to the depression force. The letter Y denotes the second relationship between the depression force and the desired deceleration rate used in the step 210. In this second relationship Y, the desired deceleration rate is also proportional to the depression force. As shown, the slope of the line X is less than the slope of the line Y.

As a result of cooperation among the steps 204, 208, and 210, the first relationship between the desired deceleration rate and the depression force or the second relationship is selected in compliance with a selection request transmitted via the selection signal S4. Specifically, the first relationship is selected when the manual switch 61 is closed. The second relationship is selected when the manual switch 61 is open.

After the steps 208 and 210, the program advances to a step 212 in which the current value of the actual rate of deceleration of the vehicle is derived from the deceleration rate signal S6. In this flowchart, the variable Ract represents this actual deceleration rate value.

In a step 220 following the step 212, the desired deceleration rate value Rdes and the actual deceleration rate value Ract are compared. If the actual value Ract is greater than the desired value Rdes, the program advances to the step 206. If the actual value Ract and the desired value Rdes are equal, the program advances to a step 222. If the actual value Ract is less than the desired value Rdes, the program advances to a step 224.

As described previously, in the step 206, the control signal S5 designed to de-energize the three-way valve 62 is outputted. This exposes the adjustable pressure chamber 48 of the power booster 14 to vacuum.

In the step 222, the control signal S5 designed to energize the three-way valve 62 at the lower level is outputted. As described previously, this allows the pressure in the adjustable pressure chamber 48 of the power booster 14 to remain constant.

In the step 224, the control signal S5 designed to energize the three-way valve 62 at the higher level is outputted. As described previously, this exposes the adjustable pressure chamber 48 of the power booster 14 to atmosphere.

After the steps 206, 222, and 224, the program returns to the first step 100. Accordingly, this program is reiterated.

As a result of cooperation between the steps 220 and 206, when the actual deceleration rate is greater than the desired deceleration rate, the adjustable pressure chamber 48 of the power booster 14 is exposed to vacuum. This reduces the pressure differential across the power piston 44 of the power booster 14, thereby decreasing the braking force and thus reducing the actual deceleration rate.

As a result of cooperation between the steps 220 and 222, when the actual deceleration rate is equal to the desired deceleration rate, the pressure in the adjustable pressure chamber 48 of the power booster 14 is maintained as it is. This holds the pressure differential across the power piston 44 of the power booster 14, thereby also maintaining the braking force and the actual deceleration rate as they are.

As a result of cooperation between the steps 220 and 224, when the actual deceleration rate is less than the desired deceleration rate, the atmospheric pressure is supplied to the adjustable pressure chamber 48 of the power booster 14. This increases the pressure differential across the power piston 44 of the power booster 14, thereby enhancing the braking force and thus increasing the actual deceleration rate.

In this way, when the brake pedal 10 is depressed, the vehicle is subjected to a braking force at a level where the actual deceleration rate is held essentially equal to the desired deceleration rate which depends on the depression force applied to the brake pedal 10 in accordance with the selected one of the first and second relationships. Specifically, the first relationship and the second relationship are selected when the manual switch 61 is in its closed and open positions respectively. Since the degree of depression of the brake pedal 10 depends on the depression force applied to the brake pedal 10, the desired deceleration rate is also determined by the degree of depression of the brake pedal 10, that is, the position of the brake pedal 10. Since the desired deceleration rate depends solely on the depression force, the actual deceleration rate is determined solely on the basis of the depression force and is independent of other vehicle parameters, such as the vehicle load and the temperature of brake pads.

It should be understood that further variations and modifications of this invention may be made without departing from the spirit of this invention. For example, a pressure greater than atmospheric pressure may be supplied to the adjustable pressure chamber 48 of the power booster 14 in place of the atmospheric pressure. In this case, an air pump or a liquid pump can be used to supply the pressure greater than the atmospheric pressure.

A valve designed to continuously adjust the pressure supplied to the adjustable pressure chamber 48 of the power booster 14 may be used in place of the three-way valve 62.

A tandem-type power booster may be used in place of the power boosters of Figs. 1 and 6.

It is possible to select one of more than two relationships between the depression force applied to the brake pedal 10 and the desired braking force applied to the vehicle in the embodiment of Fig. 1.

It is possible to select one of more than two relationships between the depression force applied to the brake pedal 10 and the desired rate of deceleration of the vehicle in the embodiment of Fig. 6.

**WHAT IS CLAIMED IS:**

1.     " A brake system for a vehicle, comprising:

(a)   a brake operating member;

(b)   means for sensing the magnitude of a force applied to the brake operating member;

(c) ..means for determining a desired magnitude of a braking force applied to the vehicle, the desired braking force magnitude depending on the magnitude of the force applied to the brake operating member in accordance with a changeable relationship therebetween;

(d)   means for changing the relationship between the desired braking force magnitude and the magnitude of the force applied to the brake operating member; and

(e)   means for adjusting the actual magnitude of the braking force toward the desired braking force magnitude.

2.     The system of claim 1, wherein the adjusting means comprises:

(a)   means for sensing the actual magnitude of the braking force;

(b)   means for comparing the desired and actual braking force magnitudes; and

(c)   means for controlling the actual braking force magnitude on the basis of the results of the comparison.

3.     The system of claim 1, wherein the adjusting means comprises:

(a)   a power booster for enhancing the braking force to an adjustable extent;

(b)   means for sensing the actual magnitude of the braking force;

(c)   means for comparing the desired and actual braking force magnitudes; and

(d) means for increasing and decreasing the extent of enhancement of the braking force when the actual braking force magnitude is less than and greater than the desired braking force magnitude respectively.

4. The system of claim 3, wherein the power booster comprises:

(a) a reference pressure chamber exposed to a reference pressure;

(b) a adjustable pressure chamber exposed to an adjustable pressure; and

(c) a power piston subjected to the pressure differential between the reference and adjustable pressure chambers, the extent of enhancement of the braking force depending on the pressure differential across the power piston.

5. The system of claim 1, wherein the relationship between the desired braking force magnitude and the magnitude of the force applied to the brake operating member is changeable between first and second preset relationships.

6. A brake system for a vehicle, comprising:

(a) a brake operating member;

(b) means for sensing the magnitude of a force applied to the brake operating member;

(c) means for determining a desired rate of deceleration of the vehicle which depends on the magnitude of the force applied to the brake operating member in accordance with a changeable relationship therebetween;

(d) means for changing the relationship between the desired deceleration rate and the magnitude of the force applied to the brake operating member; and

(e) means for adjusting the actual rate of deceleration of the vehicle to the desired deceleration rate.

7.      The system of claim 6, wherein the adjusting means comprises:

(a)  means for sensing the actual rate of deceleration of the vehicle;

(b)  means for comparing the desired and actual deceleration rates; and

(c)  means for controlling the actual deceleration rate on the basis of the results of the comparison.

8.      The system of claim 6, wherein the adjusting means comprises:

(a)  a power booster for enhancing the braking force to an adjustable extent;

(b)  means for sensing the actual rate of deceleration of the vehicle;

(c)  means for comparing the desired and actual deceleration rates; and

(d)  means for increasing and decreasing the extent of enhancement of the braking force when the actual deceleration rate is less than and greater than the desired deceleration rate respectively.

9.      The system of claim 8, wherein the power booster includes:

(a)  a reference pressure chamber exposed to a reference pressure;

(b)  a adjustable pressure chamber exposed to an adjustable pressure; and

(c)  a power piston subjected to the pressure differential between the reference and adjustable pressure chambers, the extent of enhancement of the braking force depending on the pressure differential across the power piston.

10.     The system of claim 6, wherein the relationship between the desired deceleration rate and the magnitude of the force applied to the brake operating member is changeable between first and second preset relationships.

FIG.1

# FIG.2

DERIVE DEPRESSION FORCE F — 100

IS BRAKE PEDAL DEPRESSED ? — 102
NO

YES

IS FIRST RELATION SELECTED ? — 104
NO

YES

108 — Bdes = f (F)

Bdes = g (F) — 110

DERIVE PRESSURE P1 — 112

DERIVE PRESSURE P2 — 114

$\triangle P = P1 - P2$ — 116

Bact = h ($\triangle P$) — 118

Bact > Bdes

COMPARE Bdes AND Bact — 120

Bact < Bdes

106 — DE-ENERGIZE VALVE

Bact = Bdes

122 — ENERGIZE VALVE AT LOWER LEVEL

124 — ENERGIZE VALVE AT HIGHER LEVEL

# FIG.3

# FIG.4

# FIG.5

80 CONTROL UNIT

I/O

S5B

S5A

62B VALVE

TO INLET 56

62A VALVE

TO OUTLET 57

# FIG.8

DESIRED DECELERATION RATE

Y

X

DEPRESSION FORCE

# FIG.6

55 VACUUM SOURCE

54
42
14
46
50
48
18
44
12
58
38
16
S3
10
30
32
34
36
40
52
56
20
22
24
26
57

62

THREE-WAY VALVE

S4

97
DECELERATION SENSOR

60 SELECTION UNIT

84
ROM 86

61

CPU

I/O

S5

RAM

Vcc

88
82

80 CONTROL UNIT

S6

0136690

0136690

# FIG.7

DERIVE DEPRESSION FORCE F — 200

IS BRAKE PEDAL DEPRESSED ? — 202
NO / YES

IS FIRST RELATION SELECTED ? — 204
NO / YES

208 — Rdes = i (F)

Rdes = j (F) — 210

DERIVE ACTUAL DECELERATION RATE Ract — 212

COMPARE Rdes AND Ract — 220
Ract > Rdes / Ract = Rdes / Ract < Rdes

206 — DE-ENERGIZE VALVE

222 — ENERGIZE VALVE AT LOWER LEVEL

224 — ENERGIZE VALVE AT HIGHER LEVEL